# EUROPEAN PATENT APPLICATION

(11) **EP 4 779 947 A1**
(43) Date of publication of application: **22.07.2026**
(21) Application number: 25211434.3
(22) Date of filing: 27.10.2025
(51) Int. Cl.: H04L 43/0852

(54) **PACKET SAMPLING CONTROL AND OUT OF BAND MESSAGE GENERATION AND TRANSMISSION, FOR ON BOX ANOMALY DETECTION AND REPORTING FOR USE IN ROOT CAUSE DETERMINATIONS OF LATENCY SERVICE LEVEL AGREEMENT (SLA) BREACHES**

(30) Priority: 20.01.2025 US 202519032357
(71) Applicant: Juniper Networks, Inc., Sunnyvale, CA 94089-1206 (US)
(72) Inventor: HEDGE, Shraddha, Sunnyvale, 94089 (US); SHAW, Nancy Y., Sunnyvale, 94089 (US); VAID, Shivam, Sunnyvale, 94089 (US); RAJ, Asif, Sunnyvale, 94089 (US); CHANDRASEKARAN, Mathuravalli, Sunnyvale, 94089 (US); SATYANARAYANA, Vyasraj, Sunnyvale, 94089 (US); SONOWAL, Hiranya, Sunnyvale, 94089 (US)
(74) Representative: D Young & Co LLP

(57) **Abstract**

Packets that experience longer delays (residence time) on a router are identified and used in determining whether or not to sample the packet. Information about sampled packets, along with information such as on router (or on router forwarding engine) residence time, normalized delay, and a reason(s) for the higher delay are then exported to an external collector device. This mechanism of reporting delayed packets helps with finding the root cause of latency service level agreement (SLA) breaches.

## Description

### § 1. BACKGROUND OF THE INVENTION

### § 1.1 FIELD OF THE INVENTION

The present application concerns communications networks. In particular, the present application concerns helping to determine the root cause(s) of delays of data forwarded in at least a portion of a communications network.

### § 1.2 BACKGROUND INFORMATION

The discussion in this section is not intended to be an admission of prior art.

### § 1.2.1 THE PROBLEM OF LATENCY IN DATA FORWARDING

When traffic for an application/service experiences high (e.g., higher than a threshold level, such as a level defined by a service agreement) latency, there may be many potential reasons or root causes for the high latency. For example, the problem may range from link latency variations, to queuing delays, to application-level issues, etc. It is important for a network owner or operator to find the issue(s) that caused, or is causing, high latency so that the network owner or operator can take appropriate measures to mitigate or eliminate the issue(s). Unfortunately, however, in large networks, it is challenging to find out the reason(s) or root cause(s) for latency variations.

To find the issue(s) that caused, or is causing, high latency in a network, there are various proposed operational approaches that depend on the actual data traffic being sampled. These approaches typically involve capturing the actual time data traffic (e.g., a packet) spent at each node and on each link to pinpoint where exactly high latency is or has incurred. Unfortunately, these approaches are typically probabilistic and consequently, might not really capture the latency data for the packet(s) that suffered from the latency breaches.

### § 1.2.2 EXISTING LATENCY DETECTION SCHEMES AND THEIR PERCEIVED LIMITATIONS

Competing schemes for detecting latency and/or determining the root cause(s) of latency include:
- J. Kumar, et al, "Inband Flow Analyzer," draft-kumar-ippm-ifa-07 (Internet Engineering Task Force, September 07, 2023)(referred to as "the IFA draft" and incorporated herein by reference);
- H. Song, et al, "Network Telemetry Framework," Request for Comments: 9232 (Internet Engineering Task Force, May 2022)(referred to as "RFC 9232" or "Network Telemetry Framework" and incorporated herein by reference);
- C. Filsfils, et al, "Path Tracing in SRv6 networks," draft-filsfils-spring-path-tracing-05 (Internet Engineering Task Force, October 23, 2023)(referred to as "the path tracing draft" and incorporated herein by reference); and
- H. Song, et al, "On-Path Telemetry using Packet Marking to Trigger Dedicated OAM Packets," draft-song-ippm-postcard-based-telemetry-16 (Internet Engineering Task Force, May 30, 2023)(referred to as "the packet marking draft" and incorporated herein by reference)
   Schemes, such as those listed above, are discussed in §§ 1.2.2.1 and 1.2.2.2 below.

### § 1.2.2.1 IN-BAND MONITORING LATENCY DETECTION

### SCHEMES

In-band monitoring approaches, such as, for example:
- F. Brockners, Ed., "In Situ Operations, Administration, and Maintenance (IOAM) Deployment," Request for Comments: 9378 (Internet Engineering Task Force, April 2023)(referred to as "RFC 9378" and incorporated herein by reference);
- L. Andersson, et al, "MPLS Network Actions Framework," draft-andersson-mpls-mna-fwk-01 (Internet Engineering Task Force, April 27, 2022)(referred to as "the MNA draft" and incorporated herein by reference); and
- "P4 Drives the Innovation and Practical Application of Global Scheduling Ethernet GSE)" (Available online at /p4.org/p4-spec/docs/INT_v2_1.pdf, December 2, 2024)(referred to as "INT-MD: (In-band Telemetry Specification)" and incorporated herein by reference.)
have been proposed.

The approaches in the above-cited proposals involve collecting operational and telemetry information in the data packet while it traverses a path between two points in a communications network. Each of these monitoring approaches define a new additional header to record residence time. Typically, collectors don't have the ability to process every packet result for residence time due to huge amount of traffic in the network.. Since it is not feasible to capture this information for all packets, flow selection and packet sampling mechanisms are used.

Unfortunately, these in-band monitoring schemes have a number of limitations. For example, these in-band monitoring schemes add information to be carried in (e.g., a header of) the data packet. This additional overhead increases the bandwidth of the flow and can therefore actually exacerbate latency problems. Further, these in-band monitoring schemes require new packet header processing. Consequently, they generally cannot be deployed until all nodes are capable of processing the new packet header, which may require a hardware refresh on all nodes.

### § 1.2.2.2 LATENCY DETECTION SCHEMES THAT EXPORT TELEMETRY INFORMATION FROM THE NODES

Approaches that export telemetry information from nodes, such as, for example:
- H. Song, et al, "On-Path Telemetry using Packet Marking to Trigger Dedicated OAM Packets," draft-song-ippm-postcard-based-telemetry-16 (Internet Engineering Task Force, May 30, 2023)(referred to as "the packet marking draft" and incorporated herein by reference); and
- "P4 Drives the Innovation and Practical Application of Global Scheduling Ethernet GSE)" (Available online at /p4.org/p4-spec/docs/INT_v2_1.pdf, December 2, 2024)(referred to as "INT-MD: (In-band Telemetry Specification)" and incorporated herein by reference.)
have been proposed. The approaches in these proposals collect, on the router, meta data about the packet(s) such as, for example, in-interface/out-interface, in-time/out-time, etc. This collected information is then exported, out-of-band, to an external entity for analysis.

Generally, approaches that export telemetry information from nodes have a number of challenges. For example, packet sampling mechanisms are employed to make these solutions scalable. Unfortunately, the random or unfocused nature of sampling makes it challenging to identify (and sample) exactly the same packet on each box across the communications path being monitored. Since packet sampling is used, it might not be possible to capture the latency data, at each node, for the packet that experienced latency. Consequently, latency breach root cause analysis is typically based on heuristics, and might not be accurate.

There are proposals to use certain bits in the packet header or a new header that carries an indication that the packet needs to be sampled, but these schemes themselves raise problems and challenges similar to those, discussed above, occurring when modifying the packet header to carry the information.

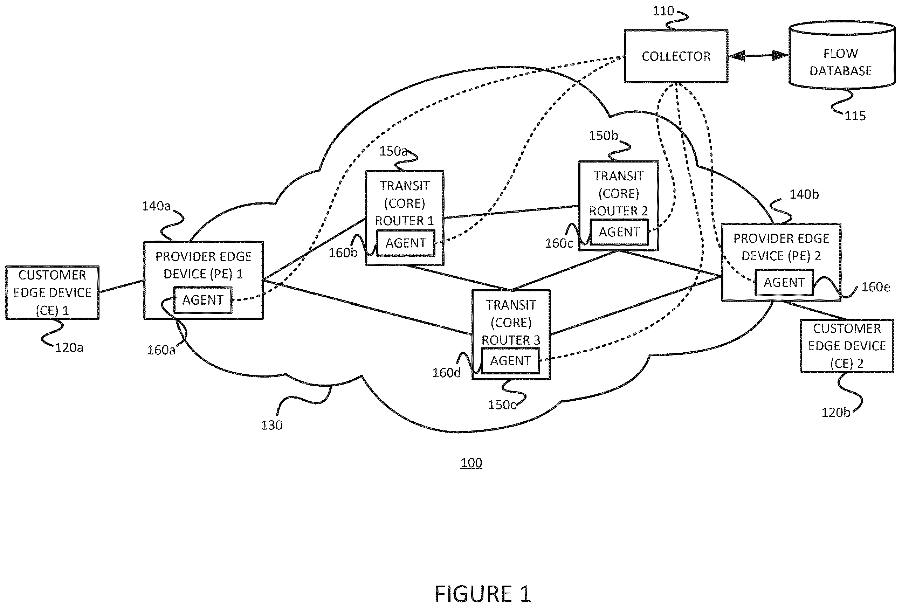

Figure 1 is a simple network topology 100 used to illustrate latency detection schemes that export telemetry information from the nodes. As shown, customer edge devices CE1 120b and CE2 120b communicate via a transport network 130. The transport network 130 includes provider edge devices PE1 140a and PE2 140b, as well as transit routers 150a-150c. The latency detection scheme includes at least one centralized collector(s) 110, as well as agents 160a-160e on every network node (e.g., router and/or switch) 140a, 140b, 150a, 150b, 150c in a transport network 130. As shown by the dotted connectors, the agents 160a-160e provide information to the collector(s) 110. The collector(s) 110 stores some or all of the collected information, and/or information derived from the collected information, in a flow database 115.

The main architectural backbone defined by the nodes (PEs and transport routers) and centralized collector(s) 110 enables network-wide, long-term, and/or short-term active flow analysis. For example, each node 140/150 pushes discovered flow information using a node-level sampling technique, to the collector(s) 110, using existing protocols (e.g., B. Claise, Ed., "Specification of the IP Flow Information Export (IPFIX) Protocol for the Exchange of Flow Information," Request for Comments: 7011 (Internet Engineering Task Force, September 2013)(referred to as "RFC 7011" and incorporated herein by reference) and others discussed above).

As alluded to above, existing packet sampling settings are configured on each of the nodes to sample the packet(s). Two characteristics of traditional sampling, as implemented in most existing routers/switches, are that (1) sampling frequency is pre-configured on each node; and (2) each node performs sampling independently of sampling performed by the other nodes. The fact that sampling frequency is pre-configured on each node enables randomly picking a packet from an ongoing flow for sampling. It is not feasible to sample all frames due to the actual traffic density. The fact that each node performs sampling independently results in potentially differing packet(s), their properties, and/or information about them, being sent by different nodes to the collector. As alluded to above, this causes independent flow observations, which might or might not be useful for detecting anomalies at the collector.

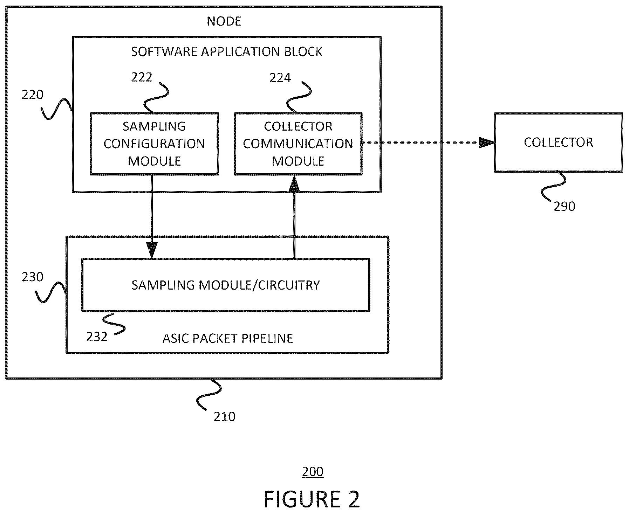

Referring to Figure 2, each node 210 (Recall, e.g., PEs 140 and transit routers 150.) includes two main components in the implementation of flow monitoring -- (1) a software application block 220; and (2) an ASIC packet pipeline 230. The software application block 220 may be part of the control plane (e.g., routing engine) of a router. The ASIC packet pipeline 230 may be part of the forwarding plane of a router. In the software application block 220, software components in the agent (Recall 160.) are involved in communicating with the external collector(s) 290, and configuring the node 210 for sampling settings. The ASIC packet pipeline (e.g., packet parsing pipeline) 230 includes a sampling module/circuitry 232, which performs the actual sampling, as configured, and provides the sampled information to collector communication module 224 in the software block(s) 220. As indicated by the dotted line, the sampled information may be provided as a complete packet, properties of the packet, and/or information about the packet, via the host path. The flows sampled today in the ASIC packet pipeline 230 are random or unfocused, but confirming the sampling rate set in the sampling configuration module 222.

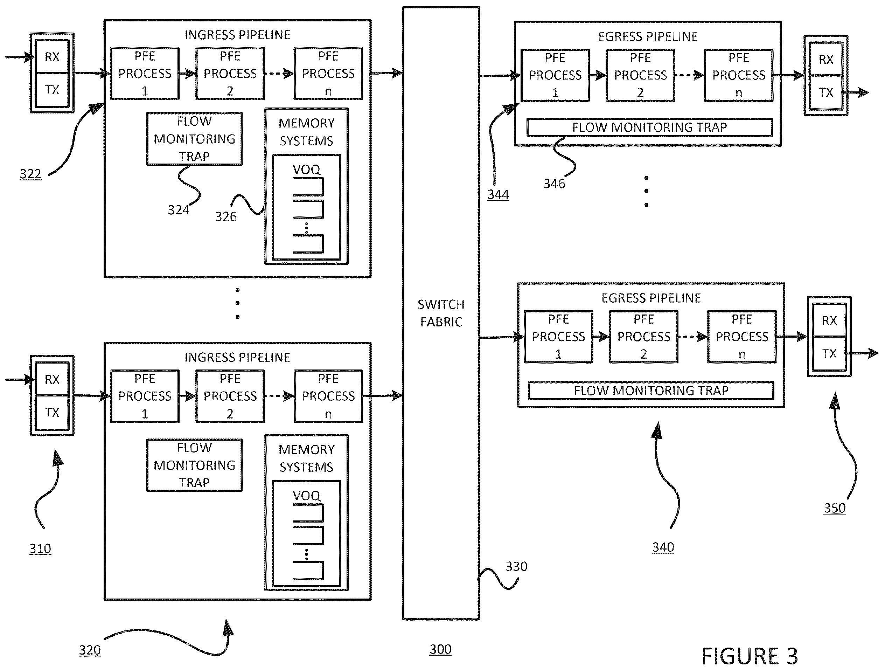

Referring to ASIC pipeline 230 of Figure 2, Figure 3 illustrates an example packet forwarding engine (PFE) 300 which may be used to sample packets. The example PFE 300 includes ingress interfaces 310, ingress pipelines 320, a switch fabric 330, egress pipelines 340, and egress interfaces 350. The PFE processes 322/344 of the ingress and/or egress pipelines 320/340 may include, for example, an ingress parser, a filter, a sample, an ingress traffic manager, a forwarding lookup, an egress packet modification, an egress parser, and ingress result processor, etc.

A typical flow monitoring implementation in a generic ASIC is explained with reference to Figure 3. Packet sampling occurs in the ingress pipeline 320 and/or in the egress pipeline 340 by flow monitoring trap 324 and/or 346, respectively. The ingress pipeline 320 includes packet forwarding engine (PFE) processes 322. A received packet is queued in a VOQ 326 after the forwarding lookup process 322ᵢ is completed. Based on port credits, the packet is subsequently dequeued and scheduled for egress processing. Eventually, packets exit the network port at egress interfaces 350 (e.g., via switch fabric 330 and an egress pipeline 340).

### § 2. SUMMARY OF THE INVENTION

Particular aspects are set out in the appended independent claims. Various optional embodiments are set out in the dependent claims. Example methods consistent with the present description may be used to help perform root cause analysis of traffic latencies, or at least to intelligently gather information (e.g., in a targeted manner) used in a root cause analysis of traffic latencies. One example method for use on a communications network node comprises: (a) receiving, by the communications network node, an ingress packet; (b) queuing, by a packet forwarding engine (PFE) of the communications network node, the ingress packet received in a virtual output queue (VOQ); (c) generating, by the communications network node, a delay measurement or indication, based on at least one of (A) a queuing delay of the ingress packet received, and/or (B) a residence time, on at least a portion of the communications network node, of the ingress packet received; (d) determining, by the communications network node, whether to or not to sample the ingress packet using at least the delay measurement or indication generated; (e) generating, by the communications network node, a message (e.g., not within the packet, and neither appended nor prepended to the packet) including, for each of at least one sampled ingress packet, at least one of (i) an absolute delay, (ii) an expected delay associated with the communications network node, and/or (iii) an anomaly reason; and (f) sending, by the communications network node, the message generated towards a traffic sample collector for (e.g., root cause) analysis.

In at least some example implementations of the example method, the residence time, on at least a portion of the communications network node, of the ingress packet received, is normalized as a function of an expected delay associated with the communications network node. For example, the expected delay associated with the communications network node may be a function of at least one of (A) a packet processing capacity of an application specific integrated circuit (ASIC) to which the ingress PFE belongs, (B) head-of-line blocking at the queue, (C) the presence or absence of cut-through switching technology, (D) packet recycle handling, (E) a type of on-chip memory used by the ASIC, (F) a type of off-chip memory used by the ASIC, (G) a port speed of a port on the communications network node, on which the packet arrived and/or (H) a port speed of a port on the communications network node, on which the packet is forwarded to a next hop.

In at least some example implementations of the example method, the message generated complies RFC 7011.

In at least some example implementations of the example method, the message generated is separate from the packet sampled, and the act of sending the message generated towards a collector is separate from an act of forwarding to a next hop, by the communications network node, the packet sampled.

In at least some example implementations of the example method, the act of determining, by the communications network node, whether to or not to sample the ingress packet using at least the delay measurement or indication generated, is further a function of a packet priority or Class of Service (CoS).

In at least some example implementations of the example method, the anomaly reason is at least one of (A) a queuing delay at a VOQ, (B) a memory access latency on the ingress PFE of the communications network node, and/or (C) one or more recycle paths through a pipeline of the ingress PFE of the communications network node. In at least some such example implementations, the ingress PFE is part of an application specific integrated circuit (ASIC) configured to monitor and provide the at least one of (A) the queuing delay, (B) the memory access latency on the ingress PFE of the communications network node, and/or (C) the one or more recycle paths through a pipeline of the ingress PFE of the communications network node.

In some example implementations of the example method, the acts of queuing the ingress packet received in a virtual output queue (VOQ), generating a delay measurement or indication, and determining whether to or not to sample the ingress packet, are performed by the PFE. In at least some such example implementations, the PFE is, or is a part of, an application specific integrated circuit (ASIC).

As noted above, example methods consistent with the present description may be used to help perform root cause analysis of traffic latencies, or at least to intelligently gather information (e.g., in a targeted manner) used in a root cause analysis of traffic latencies. One example method for use on a collector device comprises: (a) receiving, by the collector device, a plurality of flow congestion messages from a plurality of nodes of a communications network, wherein each of the plurality flow congestion messages includes at least one of (A) an absolute delay experienced by a flow at the node, (B) an expected delay for the node, and/or (C) an anomaly reason, and wherein each of the plurality of flow congestion messages is separate from data packets of the flow; and (b) performing a root cause analysis of latency of one or more of the flows using the received plurality of IP flow messages. In at least some such example methods, samples included in the plurality of flow congestion messages were generated, in a non-random manner, by each of the plurality of nodes.

An example communications network node may be used to help perform root cause analysis of traffic latencies, or at least to intelligently gather information (e.g., in a targeted manner) used in a root cause analysis of traffic latencies. One example communications network node comprises: (a) an interface adapted to receive an ingress packet; (b) a packet forwarding engine (PFE) adapted to (1) queue the ingress packet received in a virtual output queue (VOQ), and (2) generate a delay measurement or indication, based on at least one of (A) a queuing delay of an ingress packet received by the communications network node, and/or (B) a residence time, on at least a portion of the communications network node, of the ingress packet received by the communications network node; and (c) an application specific integrated circuit (ASIC) adapted to determine whether to or not to sample the ingress packet using at least the delay measurement or indication generated.

In at least some example implementations, the example communications network node further comprises (d) at least one processor configured to (1) generate a message including, for each of at least one sampled ingress packet, at least one of (i) an absolute delay, (ii) an expected delay associated with the communications network node, and/or (iii) an anomaly reason; and (2) send the message generated towards a traffic sample collector for root cause analysis. In at least some such example implementations of the communication network node, the anomaly reason is at least one of (A) a queuing delay at a VOQ, (B) a memory access latency on the ingress PFE of the communications network node, and/or (C) one or more recycle paths through a pipeline of the ingress PFE of the communications network node.

In some example implementations of the example communications network, the residence time, on at least a portion of the communications network node, of the ingress packet received, is normalized as a function of an expected delay associated with the communications network node. In at least some such example implementations, the expected delay associated with the communications network node is a function of at least one of (A) a packet processing capacity of an application specific integrated circuit (ASIC) to which the ingress PFE belongs, (B) head-of-line blocking at the queue, (C) the presence or absence of cut-through switching technology, (D) packet recycle handling, (E) a type of on-chip memory used by the ASIC, (F) a type of off-chip memory used by the ASIC, (G) a port speed of a port on the communications network node, on which the packet arrived and/or (H) a port speed of a port on the communications network node, on which the packet is forwarded to a next hop.

In some example implementations of the example communications network node, the message generated complies with RFC 7011.

In at some example implementations of the example communications network node, the message generated is separate from the packet sampled, and the act of sending the message generated towards a collector is separate from an act of forwarding to a next hop, by the communications network node, the packet sampled.

In at some example implementations of the example communications network node, when determining whether to or not to sample the ingress packet using at least the delay measurement or indication generated, the ASIC is adapted to further consider a packet priority (e.g., based on Class of Service, queue priority, etc.).

A computer-readable medium may be provided with processor-executable instructions which, when executed by at least one processor, perform any of the methods described.

### § 3. BRIEF DESCRIPTION OF THE DRAWINGS

Figure 1 is a simple network topology used to illustrate latency detection schemes that export telemetry information from the nodes.
Figure 2 is a block diagram of a node having a software application block and an ASIC packet pipeline that are used in the implementation of flow monitoring.
Figure 3 illustrates a typical flow monitoring implementation in a generic ASIC.
Figure 4 illustrates an example network topology in which example embodiments consistent with the present description may be deployed.
Figure 5 is a flow diagram of an example method for performing packet processing and monitoring at a communications network (forwarding) node (e.g., a switch or router).
Figure 6 is a flow diagram of an example method for performing packet analysis at a collector, in a manner consistent with the present description.
Figure 7 illustrates two data forwarding systems, which may be used as nodes, coupled via communications links, in a communications network, such as communications network employing one or more traffic monitoring features of the present application.
Figure 8 is a block diagram of a router which may be used a communications network, such as communications network employing one or more traffic monitoring features of the present application.
Figure 9 is a block diagram of an example machine that may perform one or more of the processes described, and/or store information used and/or generated by such processes.

### § 4. DETAILED DESCRIPTION

The present disclosure may involve novel methods, apparatus, message formats, and/or data structures to help perform root cause analysis of traffic latencies, or at least to intelligently gather information (e.g., in a targeted manner) used in a root cause analysis of traffic latencies. The following description is presented to enable one skilled in the art to make and use the described embodiments, and is provided in the context of particular applications and their requirements. Thus, the following description of example embodiments provides illustration and description, but is not intended to be exhaustive or to limit the present disclosure to the precise form disclosed. Various modifications to the disclosed embodiments will be apparent to those skilled in the art, and the general principles set forth below may be applied to other embodiments and applications. For example, although a series of acts may be described with reference to a flow diagram, the order of acts may differ in other implementations when the performance of one act is not dependent on the completion of another act. Further, non-dependent acts may be performed in parallel. No element, act or instruction used in the description should be construed as critical or essential to the present description unless explicitly described as such. Also, as used herein, the article "a" is intended to include one or more items. Where only one item is intended, the term "one" or similar language is used. Thus, the present disclosure is not intended to be limited to the embodiments shown and the inventors regard their invention as any patentable subject matter described.

Example methods and implementations, described below, provide efficient anomaly detection by targeted (e.g., non-random) sampling of packets (e.g., in the ASIC PFE pipeline). This helps a collector(s) to identify latency anomalies efficiently. The present inventors have recognized that the latency of a packet within a node might be affected by several factors. Major factors include, for example: (1) queuing delays caused by backpressure from various ASIC components/modules like switch fabric, WAN (Wide Area Network) port, etc.; (2) memory access latency (high bandwidth memory (HBM), ternary content-addressable memory (TCAM), on chip buffer (OCB), etc.); and/or (3) multiple recycle path processing for a packet if the packet undergoes multiple ingress and/or egress pipeline processing. Queuing delays caused by backpressure from various ASIC components/modules is a major cause of latency. This is treated as congestion within a port or ASIC. Example embodiments and implementations, described below, identify latency anomaly in the ASIC itself and use this when determining whether or not to sample, as opposed to sampling packets randomly, or at a fixed, preset frequency, or using some other factor(s) that does not consider congestion within the node itself.

Some example embodiments consistent with the present description combine active queuing depths via congestion notification, and/or queue-priority, to control the sampling of the packet(s) so that more important packets (e.g., those with a longer delay, a longer normalized delay, and/or a higher priority) are sampled with a higher than normal probability. This help to obtain samples which are more impacted due to congestion. A collector receiving such samples from one or more nodes will have more candidate flows that are experiencing congestion and/or are higher priority, and less candidate flows that are not experiencing congestion and/or that are not high priority flows.

### § 4.1 EXAMPLE NETWORK TOPOLOGY FOR DEPLOYMENT

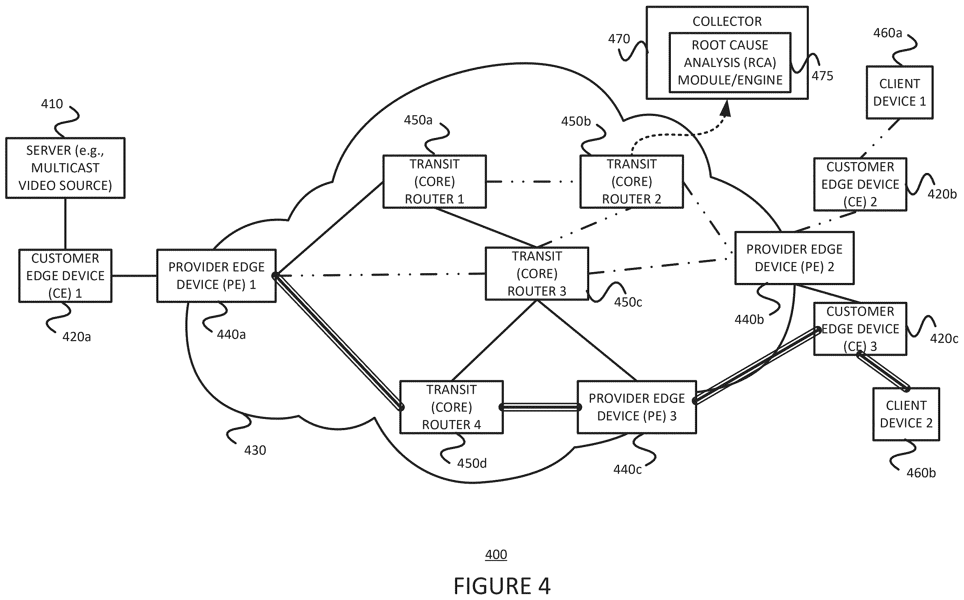

Figure 4 illustrates an example network topology 400 in which example embodiments consistent with the present description may be deployed. Example network topology 400 includes a multicast video source server 410 that streams video data to client devices 460a and 460b. The video stream is sent via customer edge device (CE) 420a, provider edge device (PE) 1 440a, one or more of transit (core) routers 450a-450d, PE 2 440b or PE 3 440c, and CE 2 420b or CE 3 420c. In the example illustrated, CE 3 420c is multihomed to the transport network via PE 2 440b and PE 3 440c. Assume that the link(s) with double-dot-dashed lines and/or their associated routers are experiencing delays, and assume that the link(s) with triple lines and/or their associated routers are not experiencing delays. Thus, in this example, client device 1 460a will experience unwanted delays, while client device 2 460b will not. Therefore, it will be desired to determine a root cause(s) of the delay. In the simplified drawing shown, only transit (core) router 2 450b is shown providing out-of-band traffic monitoring information to collector 470, though other routers in the transport network 430 may (and likely will) also provide such information to the collector 470. The collector 470 includes a root cause analysis (RCA) module or engine 475. As was the case with the example of Figure 1, some or all of the routers in Figure 4 will have an agent (not shown). Further, as was the case with the example of Figure 2, some or all of the routers in Figure 4 will have a sampling module/circuitry in their respective ASIC packet pipelines, as well as traffic monitoring modules in their respective software application blocks.

### § 4.2 EXAMPLE METHOD(S)

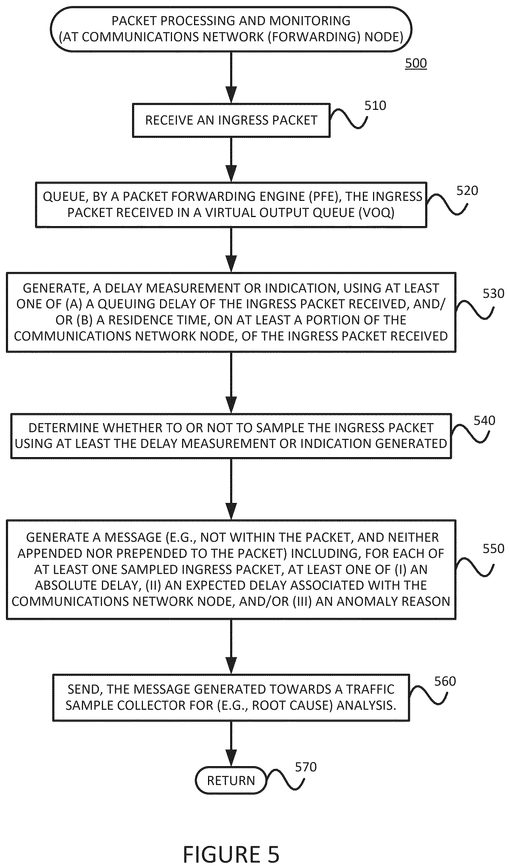

Figure 5 is a flow diagram of an example method 500 for performing packet processing and monitoring at a communications network (forwarding) node (e.g., a switch or router), in a manner consistent with the present description. As shown, the communications network node receives an ingress packet. (Block 510) The packet forwarding engine (PFE) of the communications network node then queues (e.g., in a virtual output queue (VOQ)) the ingress packet received. (Block 520) (Recall 326 of Figure 3.) The example method 500 then generates a delay measurement or indication, using at least one of (A) a queuing delay of the ingress packet received, and/or (B) a residence time, on at least a portion of the communications network node, of the ingress packet received. (Block 530) In some examples, for some packets, if there is no delay, or no unusual delay, this may be indicated (or inferred) by an explicit value or indicator, or by the lack of a delay indicator. The example method 500 then determines whether to or not to sample the ingress packet using at least the delay measurement or indication generated. (Block 540) This may be performed by sampling module/circuitry (Recall, e.g., 230 of Figure 2.) configured or adapted to perform make such a determination. The example method 500 then generates a message (e.g., not within the packet, and neither appended nor prepended to the packet) including, for each of at least one sampled ingress packet, at least one of (i) an absolute delay, (ii) an expected delay associated with the communications network node, and/or (iii) an anomaly reason (Block 550), and send the message generated towards a traffic sample collector for (e.g., root cause) analysis (Block 560). These final two steps may be performed by a collector communication module specially configured to perform the example method. (Recall, e.g., 224 of Figure 2.) The example method 500 is then left. (Node 570)

Referring back to block 530 of Figure 5, in at least some example implementations, the residence time, on at least a portion of the communications network node, of the ingress packet received, is normalized as a function of an expected delay associated with the communications network node. In at least some of these example implementations, the expected delay associated with the communications network node is a function of at least one of (A) a packet processing capacity of an application specific integrated circuit (ASIC) to which the ingress PFE belongs, (B) head of line blocking at the queue, (C) the presence or absence of cut through switching technology, (D) packet recycle handling, (E) a type of on chip memory used by the ASIC, (F) a type of off chip memory used by the ASIC, (G) a port speed of a port on the communications network node, on which the packet arrived and/or (H) a port speed of a port on the communications network node, on which the packet is forwarded to a next hop.

Referring back to block 550 of Figure 5, in at least some example implementations, the message generated complies with RFC 7011.

Still referring to block 550, the message generated may be (and most cases is) separate from the packet sampled. In this way, the data packet itself does not need to be modified (e.g., header information does not need to be added). In such a case, referring to block 560, the act of sending the message generated towards a collector is separate from an act of forwarding to a next hop, by the communications network node, the packet sampled. That is, the traffic monitoring information (e.g., sample information) is sent to the collector "out-of-band" or outside of the data plane, as a control message.

Still referring to block 550, in some example implementations, the anomaly reason is at least one of (A) a queuing delay at a VOQ, (B) a memory access latency on the ingress PFE of the communications network node, and/or (C) one or more recycle paths through a pipeline of the ingress PFE of the communications network node. Recall, e.g., Figure 3. For example, in at least some example implementations, the ingress PFE is part of an application specific integrated circuit (ASIC) configured to monitor and provide the at least one of (A) the queuing delay, (B) the memory access latency on the ingress PFE of the communications network node, and/or (C) the one or more recycle paths through a pipeline of the ingress PFE of the communications network node.

Referring back to block 540 of Figure 5, in at least some example implementations, the act of determining, by the communications network node, whether to or not to sample the ingress packet using at least the delay measurement or indication generated, is further a function of a packet priority (e.g., based on Class of Service, queue priority, etc.). In such example implementations, the probability of sampling a higher-priority packet is higher than the probability of sampling a lower-priority packet. Referring back to Figure 3, note that the memory systems 326 may include more than one VOQ for more than one output port, and more than one priority (e.g., for more than one class of service (CoS).

In at least some example implementations of the example method 500, a PFE of the node may be used to perform each of: queuing the ingress packet received in a virtual output queue (VOQ); generating a delay measurement or indication; and determining whether to or not to sample the ingress packet. In such example implementations, the PFE might be, or might be a part of, an application specific integrated circuit (ASIC). (Recall, e.g., 230 of Figure 2.)

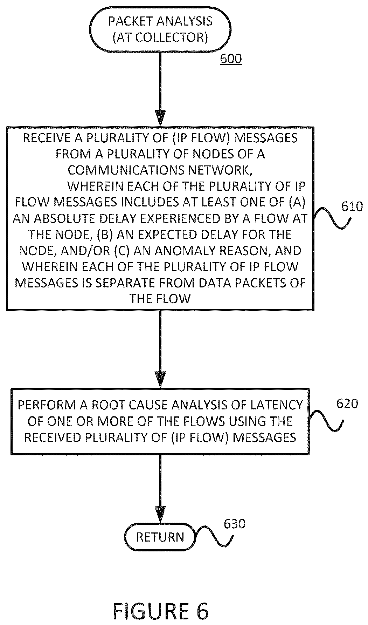

Figure 6 is a flow diagram of an example method 600 for performing packet analysis at a collector, in a manner consistent with the present description. As shown, the collector device receives a plurality of (e.g., RFC 7011 compliant IP flow) messages from a plurality of nodes of a communications network. (Block 610) Note that each of the plurality of messages includes at least one of (A) an absolute delay experienced by a flow at the node, (B) an expected delay for the node, and/or (C) an anomaly reason. (Recall block 550 of Figure 5.) Note further that each of the plurality of messages is separate from data packets of the flow. Recall that the messages are generated/sent in the control plane, not the data plane. That is, the messages are out-of-band messages since they will likely travel a different path than the data packet or flow being monitored. Next, the example method 600 performs a root cause analysis of latency of one or more of the flows using the received plurality of messages. (Block 620) For example, since the collector receives (or can determine) normalized delay (the ratio of absolute delay to expected delay), this provides a degree of delay for comparing delay across two or more nodes. Otherwise, it is difficult, if at all possible, to compare the degree of congestion across different nodes based on delay absolute delay alone. Further, the collector can use information in the anomaly reason field to help to determine the root cause of the delay of a flow. The example method 600 is then left. (Node 630)

Referring back to block 610, since the example method 500 generated the samples included in the plurality of (e.g., IP flow) messages in a non-random manner, by each of the plurality of nodes, the collector is not inundated with IP flow messages with unimportant sample information. Rather, the sample information sent to the collector has a higher probability of being relevant for purposes of delay/latency analysis than samples collected at random.

### § 4.3 EXAMPLE DATA STRUCTURES AND/OR MESSAGE FORMATS

Referring back to block 550 of 5 Figure, at a given node, one or more samples may be collected and sent to the collector. In some example implementations consistent with the present application, the format of these messages may be the same as, or conform to, the message formats described in RFC 7011, cited above.

### § 4.4 EXAMPLE APPARATUS

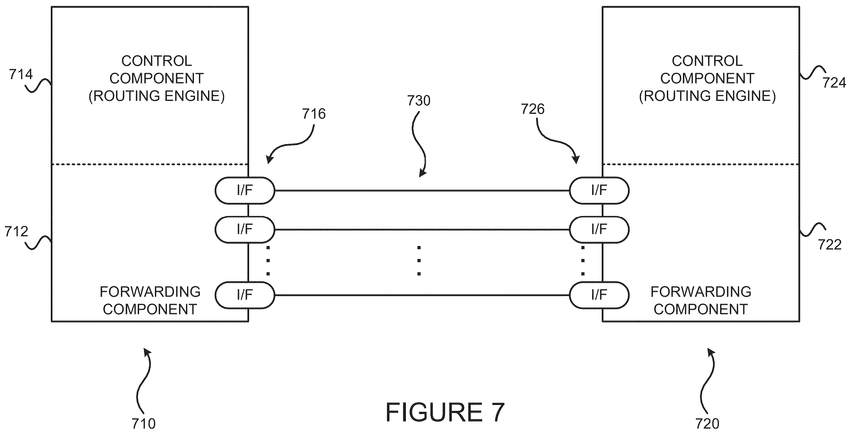

The data communications network nodes may be forwarding devices, such as routers for example. Figure 7 illustrates two data forwarding devices 710 and 720 coupled via communications links 730. The links 730 may be physical links or "wireless" links. The data forwarding systems 710,720 may be routers for example. If the data forwarding systems 710,720 are example routers, each may include a control component (e.g., a routing engine) 714,724 and a forwarding component 712,722. Each data forwarding system 710,720 includes one or more interfaces 716,726 that terminate one or more communications links 730.

Referring back to Figure 2, in one example implementation, sampling module/circuitry 232, adapted to perform sampling in accordance with any of the example embodiments described, may be provided in the forwarding component(s) 712,722. A sampling configuration module 222 and a collector communication module 224, adapted and configured to perform sampling and message generation and sending in accordance with any of the example embodiments described, may be provided in control component(s) 714,724.

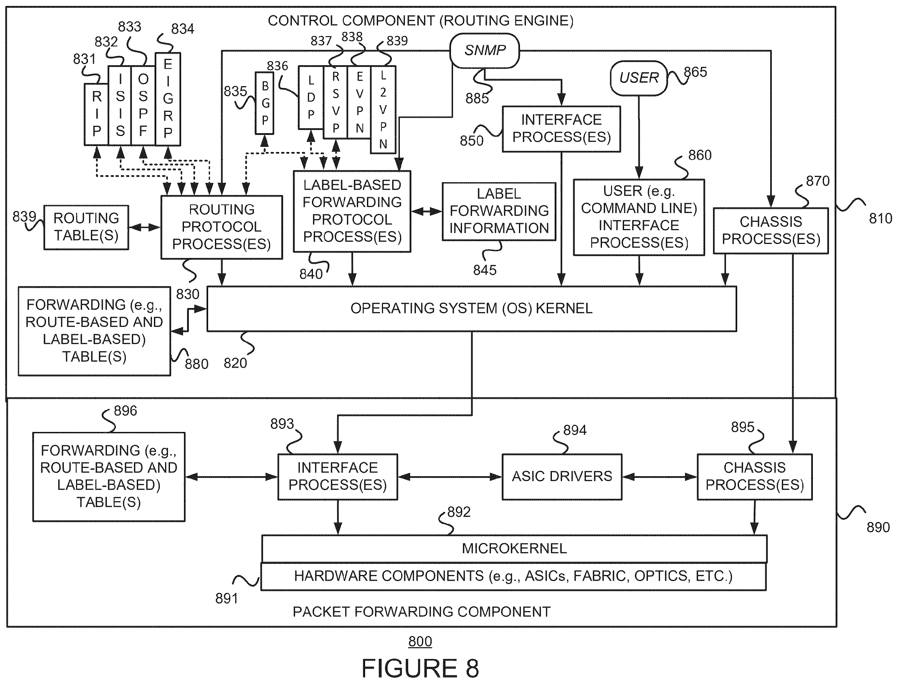

As just discussed above, and referring to Figure 8, some example routers 800 include a control component (e.g., routing engine) 810 and a packet forwarding component (e.g., a packet forwarding engine) 890.

The control component 810 may include an operating system (OS) kernel 820, routing protocol process(es) 830, label-based forwarding protocol process(es) 840, interface process(es) 850, user interface (e.g., command line interface) process(es) 860, and chassis process(es) 870, and may store routing table(s) 839, label forwarding information 845, and forwarding (e.g., route-based and/or label-based) table(s) 880. As shown, the routing protocol process(es) 830 may support routing protocols such as the routing information protocol ("RIP") 831, the intermediate system-to-intermediate system protocol ("IS-IS") 832, the open shortest path first protocol ("OSPF") 833, the enhanced interior gateway routing protocol ("EIGRP") 834 and the border gateway protocol ("BGP") 835, and the label-based forwarding protocol process(es) 840 may support protocols such as BGP 835, the label distribution protocol ("LDP") 836, the resource reservation protocol ("RSVP") 837, EVPN 838 and L2VPN 839. One or more components (not shown) may permit a user 865 to interact with the user interface process(es) 860. Similarly, one or more components (not shown) may permit an outside device to interact with one or more of the router protocol process(es) 830, the label-based forwarding protocol process(es) 840, the interface process(es) 850, and the chassis process(es) 870, via SNMP 885, and such processes may send information to an outside device via SNMP 885.

The packet forwarding component 890 may include a microkernel 892 over hardware components (e.g., ASICs, switch fabric, optics, etc.) 891, interface process(es) 893, ASIC drivers 894, chassis process(es) 895 and forwarding (e.g., route-based and/or label-based) table(s) 896.

In the example router 800 of Figure 8, the control component 810 handles tasks such as performing routing protocols, performing label-based forwarding protocols, control packet processing, etc., which frees the packet forwarding component 890 to forward received packets quickly. That is, received control packets (e.g., routing protocol packets and/or label-based forwarding protocol packets) are not fully processed on the packet forwarding component 890 itself, but are passed to the control component 810, thereby reducing the amount of work that the packet forwarding component 890 has to do and freeing it to process packets to be forwarded efficiently. Thus, the control component 810 is primarily responsible for running routing protocols and/or label-based forwarding protocols, maintaining the routing tables and/or label forwarding information, sending forwarding table updates to the packet forwarding component 890, and performing system management. The example control component 810 may handle routing protocol packets, provide a management interface, provide configuration management, perform accounting, and provide alarms. The processes 830, 840, 850, 860 and 870 may be modular, and may interact with the OS kernel 820. That is, nearly all of the processes communicate directly with the OS kernel 820. Using modular software that cleanly separates processes from each other isolates problems of a given process so that such problems do not impact other processes that may be running. Additionally, using modular software facilitates easier scaling.

Still referring to Figure 8, the example OS kernel 820 may incorporate an application programming interface ("API") system for external program calls and scripting capabilities. The control component 810 may be based on an Intel PCI platform running the OS from flash memory, with an alternate copy stored on the router's hard disk. The OS kernel 820 is layered on the Intel PCI platform and establishes communication between the Intel PCI platform and processes of the control component 810. The OS kernel 820 also ensures that the forwarding tables 896 in use by the packet forwarding component 890 are in sync with those 880 in the control component 810. Thus, in addition to providing the underlying infrastructure to control component 810 software processes, the OS kernel 820 also provides a link between the control component 810 and the packet forwarding component 890.

Referring to the routing protocol process(es) 830 of Figure 8, this process(es) 830 provides routing and routing control functions within the platform. In this example, the RIP 831, ISIS 832, OSPF 833 and EIGRP 834 (and BGP 835) protocols are provided. Naturally, other routing protocols may be provided in addition, or alternatively. Similarly, the label-based forwarding protocol process(es) 840 provides label forwarding and label control functions. In this example, the LDP 836, RSVP 837, EVPN 838 and L2VPN 839 (and BGP 835) protocols are provided. Naturally, other label-based forwarding protocols (e.g., MPLS, SR, etc.) may be provided in addition, or alternatively. In the example router 800, the routing table(s) 839 is produced by the routing protocol process(es) 830, while the label forwarding information 845 is produced by the label-based forwarding protocol process(es) 840.

Still referring to Figure 8, the interface process(es) 850 performs configuration of the physical interfaces and encapsulation.

The example control component 810 may provide several ways to manage the router. For example, it 810 may provide a user interface process(es) 860 which allows a system operator 865 to interact with the system through configuration, modifications, and monitoring. The SNMP 885 allows SNMP-capable systems to communicate with the router platform. This also allows the platform to provide necessary SNMP information to external agents. For example, the SNMP 885 may permit management of the system from a network management station running software, such as Hewlett-Packard's Network Node Manager ("HP-NNM"), through a framework, such as Hewlett-Packard's OpenView. Accounting of packets (generally referred to as traffic statistics, and which includes managing/configuring packet sampling settings in accordance with any of the example methods described in this application, the consumption, analysis, and/or reporting of the sampling result(s), etc.) may be performed by the control component 810, thereby avoiding slowing traffic forwarding by the packet forwarding component 890.

Although not shown, the example router 800 may provide for out-of-band management, RS-232 DB9 ports for serial console and remote management access, and tertiary storage using a removable PC card. Further, although not shown, a craft interface positioned on the front of the chassis provides an external view into the internal workings of the router. It can be used as a troubleshooting tool, a monitoring tool, or both. The craft interface may include LED indicators, alarm indicators, control component ports, and/or a display screen. Finally, the craft interface may provide interaction with a command line interface ("CLI") 860 via a console port, an auxiliary port, and/or a management Ethernet port.

The packet forwarding component 890 is responsible for properly outputting received packets as quickly as possible. If there is no entry in the forwarding table for a given destination or a given label and the packet forwarding component 890 cannot perform forwarding by itself, it 890 may send the packets bound for that unknown destination off to the control component 810 for processing. The example packet forwarding component 890 is designed to perform Layer 2 and Layer 3 switching, route lookups, and rapid packet forwarding.

As shown in Figure 8, the example packet forwarding component 890 has an embedded microkernel 892 over hardware components 891, interface process(es) 893, ASIC drivers 894, and chassis process(es) 895, and stores a forwarding (e.g., route-based and/or label-based) table(s) 896. The microkernel 892 interacts with the interface process(es) 893 and the chassis process(es) 895 to monitor and control these functions. The interface process(es) 892 has direct communication with the OS kernel 820 of the control component 810. This communication includes forwarding exception packets and control packets to the control component 810, receiving packets to be forwarded, receiving forwarding table updates, providing information about the health of the packet forwarding component 890 to the control component 810, and permitting configuration of the interfaces from the user interface (e.g., CLI) process(es) 860 of the control component 810. The stored forwarding table(s) 896 is static until a new one is received from the control component 810. The interface process(es) 893 uses the forwarding table(s) 896 to look up next-hop information. The interface process(es) 893 also has direct communication with the distributed ASICs. Finally, the chassis process(es) 895 may communicate directly with the microkernel 892 and with the ASIC drivers 894.

Referring back to Figure 2, in one example implementation, sampling module/circuitry 232, adapted to perform sampling in accordance with any of the example embodiments described, may be provided in the hardware components 891, microkernel 892, ASIC drivers 894 and/or interface processes 893 of the packet forwarding component 890 of Figure 8. A sampling configuration module 222 and a collector communication module 224, adapted and configured to perform sampling and message generation and sending in accordance with any of the example embodiments described, may be provided in a flow monitoring process or daemon (not shown) of the control component 810 of Figure 8. Further, the example packet forwarding engine (PFE) 300 of Figure 3, adapted to performing sampling in accordance with any of the example embodiments described, may be provided in the packet forwarding component 890 of Figure 8.

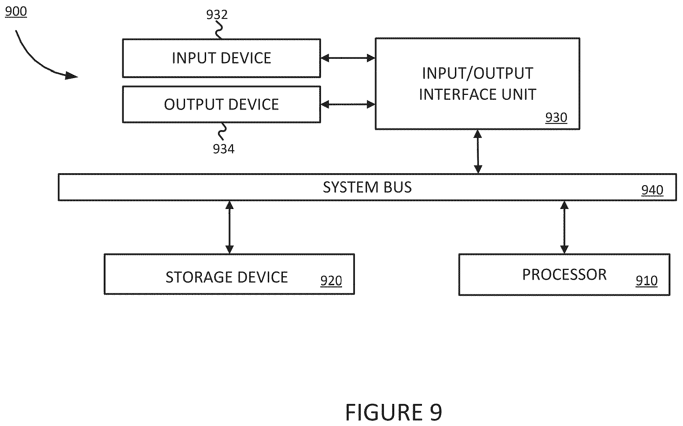

Although example embodiments consistent with the present description may be implemented on the example routers of Figure 7 or 8, embodiments consistent with the present description may be implemented on communications network nodes (e.g., routers, switches, etc.) having different architectures. More generally, embodiments consistent with the present description may be implemented on an example system 900 as illustrated on Figure 9.

Figure 9 is a block diagram of an example machine 900 that may perform one or more of the processes described, and/or store information used and/or generated by such processes. The example machine 900 includes one or more processors 910, one or more input/output interface units 930, one or more storage devices 920, and one or more system buses and/or networks 940 for facilitating the communication of information among the coupled elements. One or more input devices 932 and one or more output devices 934 may be coupled with the one or more input/output interfaces 930. The one or more processors 910 may execute machine-executable instructions (e.g., C or C++ running on the Linux operating system widely available from a number of vendors) to effect one or more aspects of the present description. At least a portion of the machine executable instructions may be stored (temporarily or more permanently) on the one or more storage devices 920 and/or may be received from an external source via one or more input interface units 930. The machine executable instructions may be stored as various software modules, each module performing one or more operations. Functional software modules are examples of components of the present description.

In some embodiments consistent with the present description, the processors 910 may be one or more microprocessors and/or ASICs. The bus 940 may include a system bus. The storage devices 920 may include system memory, such as read only memory (ROM) and/or random access memory (RAM). The storage devices 920 may also include a hard disk drive for reading from and writing to a hard disk, a magnetic disk drive for reading from or writing to a (e.g., removable) magnetic disk, an optical disk drive for reading from or writing to a removable (magneto-) optical disk such as a compact disk or other (magneto-) optical media, or solid-state non-volatile storage.

Some example embodiments consistent with the present description may also be provided as a machine-readable medium for storing the machine-executable instructions. The machine-readable medium may be non-transitory and may include, but is not limited to, flash memory, optical disks, CD-ROMs, DVD ROMs, RAMs, EPROMs, EEPROMs, magnetic or optical cards or any other type of machine-readable media suitable for storing electronic instructions. For example, example embodiments consistent with the present description may be downloaded as a computer program which may be transferred from a remote computer (e.g., a server) to a requesting computer (e.g., a client) by way of a communication link (e.g., a modem or network connection) and stored on a non-transitory storage medium. The machine-readable medium may also be referred to as a processor-readable medium. Additionally, or alternatively, a machine-readable medium can include transient media such as carrier waves and transmission media.

Example embodiments consistent with the present description (or components or modules thereof) might be implemented in hardware, such as one or more field programmable gate arrays ("FPGA"s), one or more integrated circuits such as ASICs, one or more network processors, etc. Alternatively, or in addition, embodiments consistent with the present description (or components or modules thereof) might be implemented as stored program instructions executed by a processor. Such hardware and/or software might be provided in an addressed data (e.g., packet, cell, etc.) forwarding device (e.g., a switch, a router, etc.), a laptop computer, desktop computer, a tablet computer, a mobile phone, or any device that has computing and networking capabilities.

### § 4.5 REFINEMENTS, ALTERNATIVES, AND/OR EXTENSIONS

### § 4.5.1 EXAMPLE DELAY/LATENCY MEASUREMENTS OR INDICATORS

Referring back to block 530 of Figure 3, the vast majority, if not all, ASICs in the routing industry today can measure packet residence latency by timestamping the arrival and exit of packet(s) on the port(s). Such ASICs can also monitor queuing traffic using various threshold settings.

### § 4.5.1.1 EXAMPLE OF DETERMINATION "NORMALIZED" LATENCY/DELAY

Packet residency time in the node's ASIC pipeline refers to the time the packet has spent in the ASIC. The packet residency time might depend on factors such as, for example:
- Packet processing capacity of the ASIC. For example, an older generation ASIC Packet processing delay of a 80 Gbps will be very different from newer generation 1.2 Tbps ASIC;
- Queuing and head of line internal blocking delays;
- Cut through switching technology;
- Packet Recycle handling;
- Memory type(s) (e.g., HBM, TCAM, SRAM, OCB, etc.); and/or
- Port Speed.
Due to these factor(s), the absolute residence time of a packet can differ, depending on ASIC design. Consequently, an absolute latency or absolute residence time might not accurately represent the relative congestion encountered by the packet on that device.

At least some example embodiments use a normalization technique, which allows for improved grading of the congestion level within the node. In one example, a minimum expected latency for a packet will be defined as 0, based on device characteristic. For example, a 1 µs residence time/delay on a 80 Gbps packet processing capability ASIC might be considered to be normal (that is, not congested), but that same 1 µs residence time/delay might not be considered to be normal on a 1.2 Tbps packet processing capability ASIC. Along with measured values, in some example implementations, the node shares its expected residence time for the packet. Alternatively, the node can identify its make and model, and the collector can lookup its expected residence time. Expected residence time can be precomputed and available to the node software based on manufacturer RFC2544 tests.

A ratio of measured (that is, actual) residence time and expected residence time, provide a degree of severity of the delay (anomaly).

### § 4.5.2 EXAMPLE SAMPLING DETERMINATION(S)

Referring back to block 540, the act of determining whether or not to sample the ingress packet using at least the delay measurement or indication generated may be done in a number of different alternative ways. The sampling decision may use one or more of the following:
- conditional, based on a delay measurement value being above a threshold;
- conditional, based on a normalized delay measurement value being above a threshold;
- conditional, based on whether or not a delay indicator is set by the node (e.g., by the node's PFE ASIC);
- conditional, based on a packet priority being above a threshold;
- conditional, based on a packet having a particular class of service (CoS);
- probabilistic, based on based on a delay measurement value (wherein the probability of sampling increases with the value of the delay measurement);
- probabilistic, based on a normalized delay measurement value (wherein the probability of sampling increases with the value of the normalized delay measurement);
- probabilistic, based on whether or not a delay indicator is set by the node (wherein the probability of sampling increases if the delay indicator is set);
- probabilistic, based on a packet priority (wherein the probability of sampling increases with the priority of the packet); and/or
- probabilistic, based on CoS of the packet (wherein the probability of sampling increases with the CoS of the packet).
The thresholds are generally preset, or preconfigured, but may be determined dynamically, using a preconfigured algorithm. Other factors may be considered in addition. Furthermore, two or more sampling determinations, one or more of which consider any combination of the above-listed factor(s), and one or more of which consider other factor(s) (i.e., factors unrelated to packet delay or priority) may be performed. Such sampling determinations may be performed independently (e.g., in which case, a determination to sample by any one of the determinations causes sampling to occur) or dependently (e.g., in which case, sampling only occurs when all of the sampling determinations determine to sample). That is, in the former case, the results of separate sampling determinations are logically ORed, while in the latter case, the results of the separate sampling determinations are logically ANDed. A non-exhaustive discussion of example sampling decision procedures is now provided.

As one example, whether or not to sample a packet can be simply based on whether or not there is a delay indication received (e.g., a delay bit set by the ASIC). That is, the packet is sampled (e.g., only) if a delay is indicated. The priority of the packet can also be considered. For example, the packet is sampled (e.g., only) if a delay condition is met and its priority (e.g., CoS, queue priority, etc.) is above a certain threshold.

As another example, a probability of sampling a packet is a function of a delay measurement value, or a normalized delay measurement value. For example, the probability of sampling a packet may increase as a delay measurement value or normalized delay measurement value increases. As another example, whether or not to sample the packet may be subject to the value of a delay measurement value or a normalized delay measurement value exceeding a threshold. The priority of the packet can also be considered, as discussed above.

In some example embodiments, sampling, by the communications network node, packet flows may be performed as a function of at least one of (A) packet priority (e.g., based on Class of Service, queue priority, etc.), and/or (B) a length of delay at a queue at the ingress packet forwarding engine (PFE) of the communications network node.

In some example embodiments, packet flows are sampled in a non-random manner such that a packet flow experiencing a locally anomalous latency is sampled more often than another packet flow not experiencing a locally anomalous latency, and/or such that a higher priority packet flow is sampled more often than a low priority packet flow.

### § 4.5.3 EXAMPLE SAMPLE REPORTING TECHNIQUES

Referring back to block 550, example embodiments consistent with the present description may provide new information (e.g., as new fields in an RFC 7011-compliant message) which will help the collector to identify anomalous flows, easily and accurately. This new information may include, for example, one or more of:
- Absolute residence time of the packet;
- Expected minimum residence time for the packet;
- Normalized residence time for the packet; and/or
- Anomaly reason (e.g., queuing latency, etc.).
Using the anomaly reason, the collector can determine that the flow experienced congestion in the node due to (A) queuing delays, (B) a recycle path(s), and/or (C) any other reason. Using one or more of the residence time information, the expected minimum residence time for the packet, and/or the normalized residence time for the packet, the collector can understand the severity of the congestion.

### § 4.5.4 EXAMPLE IMPLEMENTATIONS MOVING AT LEAST SOME FUNCTIONALITY FROM SOFTWARE APPLICATION BLOCK (e.g., CONTROL PLANE) TO ASIC PACKET PIPELINE (e.g., FORWARDING PLANE)

Referring back to Figure 2, in some alternative implementations, at least some of the functionality of the software application block 220 can be performed by the ASIC packet pipeline 230 instead. As one example, some functionality of collector communication module 224 can be offloaded to ASIC also. For example, a collector configuration module (not shown) can be used to program the IP address and UDP port of the collector (server) 290 in the ASIC 230. In such an example implementation, the ASIC 230 can be provided with logic to (1) buffer the samples, (2) generate the IPFIX message, and/or (3) send the IPFIX message to the remote collector (server) 290 directly, without sending them to the software application block 220. This offloading of IPFIX message generation and/or transmission to hardware is sometimes referred to as "inline IPFIX."

### § 4.6 CONCLUSIONS

Thus, from one perspective, there has now been described techniques where packets that experience longer delays (residence time) on a router are identified and used in determining whether or not to sample the packet. Information about sampled packets, along with information such as on router (or on router forwarding engine) residence time, normalized delay, and a reason(s) for the higher delay are then exported to an external collector device. This mechanism of reporting delayed packets helps with finding the root cause of latency service level agreement (SLA) breaches.

Example embodiments consistent with the present description may provide one or more of the following advantages. First, since latency-based anomaly detection is local to the node ("box"), workload on the collector is reduced. Instead, much of the workload is distributed across the nodes. Second, since delayed flows will likely be sampled more often, information reported to collector is more relevant and therefore more efficient. For example, sampling frequency is improved by considering flows experiencing congestion and/or queue priority. Third, by providing the collector with a "normalized" latency, the collector can grade delays across end-to-end flow(s) and take corrective action. Fourth, the example methods are easier to implement with existing router ASICs. Fifth, anomalies can be detected in real time, without impacting data flows due to added header(s) or probes. The example embodiments allow flow monitoring to be applied to queues selectively (e.g., based on delay and/or priority). A congestion bit, which is becoming increasingly available in modern ASICS, can be used for anomaly detection. Reporting is improved (e.g., by enhancements to IPFIX standard templates) to share a congestion indicator, a normalized delay, and/or a residence time with the collector.

Further examples of feature combinations taught by the present disclosure are set out in the following numbered clauses:
1. A method for use on a communications network node, the method comprising:
   a) receiving, by the communications network node, an ingress packet;
   b) queuing, by a packet forwarding engine (PFE) of the communications network node, the ingress packet received in a virtual output queue (VOQ);
   c) generating, by the communications network node, a delay measurement or indication, based on at least one of (A) a queuing delay of the ingress packet received, and/or (B) a residence time, on at least a portion of the communications network node, of the ingress packet received;
   d) determining, by the communications network node, whether to or not to sample the ingress packet using at least the delay measurement or indication generated;
   e) generating, by the communications network node, a message (e.g., not within the packet, and neither appended nor prepended to the packet) including, for each of at least one sampled ingress packet, at least one of (i) an absolute delay, (ii) an expected delay associated with the communications network node, and/or (iii) an anomaly reason; and
   f) sending, by the communications network node, the message generated towards a traffic sample collector for (e.g., root cause) analysis.
2. The method of clause 1, wherein the residence time, on at least a portion of the communications network node, of the ingress packet received, is normalized as a function of an expected delay associated with the communications network node.
3. The method of clause 2, wherein the expected delay associated with the communications network node is a function of at least one of (A) a packet processing capacity of an application specific integrated circuit (ASIC) to which the ingress PFE belongs, (B) head-of-line blocking at the queue, (C) the presence or absence of cut-through switching technology, (D) packet recycle handling, (E) a type of on-chip memory used by the ASIC, (F) a type of off-chip memory used by the ASIC, (G) a port speed of a port on the communications network node, on which the packet arrived and/or (H) a port speed of a port on the communications network node, on which the packet is forwarded to a next hop.
4. The method of any preceding clause, wherein the message generated complies RFC 7011.
5. The method of any preceding clause, wherein the message generated is separate from the packet sampled, and
   wherein the act of sending the message generated towards a collector is separate from an act of forwarding to a next hop, by the communications network node, the packet sampled.
6. The method of any preceding clause, wherein the act of determining, by the communications network node, whether to or not to sample the ingress packet using at least the delay measurement or indication generated, is further a function of a packet priority or Class of Service (CoS).
7. The method of any preceding clause, wherein the anomaly reason is at least one of (A) a queuing delay at a VOQ, (B) a memory access latency on the ingress PFE of the communications network node, and/or (C) one or more recycle paths through a pipeline of the ingress PFE of the communications network node.
8. The method of clause 7, wherein the ingress PFE is part of an application specific integrated circuit (ASIC) configured to monitor and provide the at least one of (A) the queuing delay, (B) the memory access latency on the ingress PFE of the communications network node, and/or (C) the one or more recycle paths through a pipeline of the ingress PFE of the communications network node.
9. The method of any preceding clause wherein the acts of
   - queuing the ingress packet received in a virtual output queue (VOQ),
   - generating a delay measurement or indication, and
   - determining whether to or not to sample the ingress packet,
   are performed by the PFE.
10. The method of clause 9 wherein the PFE is, or is a part of, an application specific integrated circuit (ASIC).
11. A computer-implemented method comprising:
   a) receiving, by a collector device, a plurality of flow congestion messages from a plurality of nodes of a communications network,
      wherein each of the plurality flow congestion messages includes at least one of (A) an absolute delay experienced by a flow at the node, (B) an expected delay for the node, and/or (C) an anomaly reason, and
      wherein each of the plurality of flow congestion messages is separate from data packets of the flow; and
   b) performing a root cause analysis of latency of one or more of the flows using the received plurality of IP flow messages.
12. The computer-implemented method of clause 11, wherein samples included in the plurality of flow congestion messages were generated, in a non-random manner, by each of the plurality of nodes.
13. A communications network node comprising:
   a) an interface adapted to receive an ingress packet;
   b) a packet forwarding engine (PFE) adapted to
      1) queue the ingress packet received in a virtual output queue (VOQ), and
      2) generate a delay measurement or indication, based on at least one of (A) a queuing delay of an ingress packet received by the communications network node, and/or (B) a residence time, on at least a portion of the communications network node, of the ingress packet received by the communications network node; and
   c) an application specific integrated circuit (ASIC) adapted to determine whether to or not to sample the ingress packet using at least the delay measurement or indication generated.
14. The communications network node of clause 13, further comprising:
   d) at least one processor configured to
   1) generate a message including, for each of at least one sampled ingress packet, at least one of (i) an absolute delay, (ii) an expected delay associated with the communications network node, and/or (iii) an anomaly reason; and
   2) send the message generated towards a traffic sample collector for root cause analysis.
15. The communications network node of clause 14, wherein the anomaly reason is at least one of (A) a queuing delay at a VOQ, (B) a memory access latency on the ingress PFE of the communications network node, and/or (C) one or more recycle paths through a pipeline of the ingress PFE of the communications network node.
16. The communications network node of any clauses 13 to 15, wherein the residence time, on at least a portion of the communications network node, of the ingress packet received, is normalized as a function of an expected delay associated with the communications network node.
17. The communications network node of clause 16, wherein the expected delay associated with the communications network node is a function of at least one of (A) a packet processing capacity of an application specific integrated circuit (ASIC) to which the ingress PFE belongs, (B) head-of-line blocking at the queue, (C) the presence or absence of cut-through switching technology, (D) packet recycle handling, (E) a type of on-chip memory used by the ASIC, (F) a type of off-chip memory used by the ASIC, (G) a port speed of a port on the communications network node, on which the packet arrived and/or (H) a port speed of a port on the communications network node, on which the packet is forwarded to a next hop.
18. The communications network node of any of clauses 13 to 17, wherein the message generated complies with RFC 7011.
19. The communications network node of any of clauses 13 to 18, wherein the message generated is separate from the packet sampled, and
   wherein the act of sending the message generated towards a collector is separate from an act of forwarding to a next hop, by the communications network node, the packet sampled.
20. The communications network node of any of clauses 13 to 19, wherein when determining whether to or not to sample the ingress packet using at least the delay measurement or indication generated, the ASIC is adapted to further consider a packet priority (e.g., based on Class of Service, queue priority, etc.).

## Claims

1. A method for use on a communications network node, the method comprising:
a) receiving, by the communications network node, an ingress packet;
b) queuing, by a packet forwarding engine, PFE of the communications network node, the ingress packet received in a virtual output queue, VOQ;
c) generating, by the communications network node, a delay measurement or indication, based on at least one of
A) a queuing delay of the ingress packet received, and/or
B) a residence time, on at least a portion of the communications network node, of the ingress packet received;
d) determining, by the communications network node, whether to or not to sample the ingress packet using at least the delay measurement or indication generated;
e) generating, by the communications network node, a message, not within the packet, and neither appended nor prepended to the packet, including, for each of at least one sampled ingress packet, at least one of
i) an absolute delay,
ii) an expected delay associated with the communications network node, and/or
iii) an anomaly reason; and
f) sending, by the communications network node, the message generated towards a traffic sample collector for root cause analysis.

2. The method of claim 1, wherein the residence time, on at least a portion of the communications network node, of the ingress packet received, is normalized as a function of an expected delay associated with the communications network node, and
wherein the expected delay associated with the communications network node is a function of at least one of
A) a packet processing capacity of an application specific integrated circuit, ASIC, to which the ingress PFE belongs,
B) head-of-line blocking at the queue,
C) the presence or absence of cut-through switching technology,
D) packet recycle handling,
E) a type of on-chip memory used by the ASIC,
F) a type of off-chip memory used by the ASIC,
G) a port speed of a port on the communications network node, on which the packet arrived, and/or
H) a port speed of a port on the communications network node, on which the packet is forwarded to a next hop.

3. The method of claim 1 or claim 2, wherein the message generated is separate from the packet sampled, and
wherein the act of sending the message generated towards a collector is separate from an act of forwarding to a next hop, by the communications network node, the packet sampled.

4. The method of any preceding claim, wherein the act of determining, by the communications network node, whether to or not to sample the ingress packet using at least the delay measurement or indication generated, is further a function of a packet priority or Class of Service, CoS.

5. The method of any preceding claim, wherein the anomaly reason is at least one of
A) a queuing delay at a VOQ,
B) a memory access latency on the ingress PFE of the communications network node, and/or
C) one or more recycle paths through a pipeline of the ingress PFE of the communications network node, and
wherein the ingress PFE is part of an application specific integrated circuit, ASIC, configured to monitor and provide the at least one of
A) the queuing delay,
B) the memory access latency on the ingress PFE of the communications network node, and/or
C) the one or more recycle paths through a pipeline of the ingress PFE of the communications network node.

6. The method of any preceding claim, wherein the acts of
- queuing the ingress packet received in a virtual output queue, VOQ,
- generating a delay measurement or indication, and
- determining whether to or not to sample the ingress packet,
are performed by the PFE, and
wherein the PFE is, or is a part of, an application specific integrated circuit, ASIC.

7. A computer-implemented method comprising:
a) receiving, by a collector device, a plurality of flow congestion messages from a plurality of nodes of a communications network,
wherein each of the plurality flow congestion messages includes at least one of
A) an absolute delay experienced by a flow at the node,
B) an expected delay for the node, and/or
C) an anomaly reason, and
wherein each of the plurality of flow congestion messages is separate from data packets of the flow; and
b) performing a root cause analysis of latency of one or more of the flows using the received plurality of IP flow messages.

8. The computer-implemented method of claim 7, wherein samples included in the plurality of flow congestion messages were generated, in a non-random manner, by each of the plurality of nodes.

9. A communications network node comprising:
a) an interface adapted to receive an ingress packet;
b) a packet forwarding engine, PFE, adapted to
1) queue the ingress packet received in a virtual output queue, VOQ, and
2) generate a delay measurement or indication, based on at least one of
A) a queuing delay of an ingress packet received by the communications network node, and/or
B) a residence time, on at least a portion of the communications network node, of the ingress packet received by the communications network node; and
c) an application specific integrated circuit, ASIC, adapted to determine whether to or not to sample the ingress packet using at least the delay measurement or indication generated.

10. The communications network node of claim 9, further comprising:
d) at least one processor configured to
1) generate a message including, for each of at least one sampled ingress packet, at least one of
i) an absolute delay,
ii) an expected delay associated with the communications network node, and/or
iii) an anomaly reason; and
2) send the message generated towards a traffic sample collector for root cause analysis.

11. The communications network node of claim 10, wherein the anomaly reason is at least one of
A) a queuing delay at a VOQ,
B) a memory access latency on the ingress PFE of the communications network node, and/or
C) one or more recycle paths through a pipeline of the ingress PFE of the communications network node.

12. The communications network node of any of claims 9 to 11, wherein the residence time, on at least a portion of the communications network node, of the ingress packet received, is normalized as a function of an expected delay associated with the communications network node.

13. The communications network node of claim 12, wherein the expected delay associated with the communications network node is a function of at least one of
A) a packet processing capacity of an application specific integrated circuit, ASIC, to which the ingress PFE belongs,
B) head-of-line blocking at the queue,
C) the presence or absence of cut-through switching technology,
D) packet recycle handling,
E) a type of on-chip memory used by the ASIC,
F) a type of off-chip memory used by the ASIC,
G) a port speed of a port on the communications network node, on which the packet arrived, and/or
H) a port speed of a port on the communications network node, on which the packet is forwarded to a next hop.

14. The communications network node of any of claims 9 to 13, wherein the message generated is separate from the packet sampled, and
wherein the act of sending the message generated towards a collector is separate from an act of forwarding to a next hop, by the communications network node, the packet sampled.

15. The communications network node of any of claims 9 to 14, wherein when determining whether to or not to sample the ingress packet using at least the delay measurement or indication generated, the ASIC is adapted to further consider a packet.
